# EUROPEAN PATENT SPECIFICATION

(11) **EP 1 709 139 B1**
(45) Date of publication and mention of the grant of the patent: **09.07.2008**
(21) Application number: 05702232.9
(22) Date of filing: 13.01.2005
(51) Int. Cl.: C09K 3/14

(54) **METHOD OF COATING ABRASIVES**
VERFAHREN ZUR HERSTELLUNG VON SCHLEIFMITTELN AUF UNTERLAGE
PROCEDE DE PRODUCTION DE REVETEMENTS ABRASIFS

(30) Priority: 15.01.2004 IE 20040022
(43) Date of publication of application: 11.10.2006
(73) Proprietor: Element Six Limited, County Clare (IE)
(72) Inventor: EGAN, David Patrick, Kilkishen, County Clare (IE); ENGELS, Johannes Alexander, Newport, County Tipperary (IE); FISH, Michael Lester, Ennis, County Clare (IE)
(74) Representative: Price, Nigel John King
(86) International application number: PCT/IB2005/000062
(87) International publication number: WO 2005/078045

(56) References cited:
- US-A- 4 505 720
- US-A- 5 024 680

## Description

### BACKGROUND OF THE INVENTION

This invention relates to a method of coating ultra-hard abrasive material, in particular abrasive grit.

Abrasive grit such as diamond and cubic boron nitride particles, are widely used in sawing, drilling, grinding, polishing and other abrasive and cutting applications. In such applications the grit is generally surrounded by a matrix consisting of metals such as Fe, Co, Ni, Cu and alloys thereof (metal bonds). Alternatively, resin (resin bond) or vitreous (vitreous bond) matrices can be used, the choice of matrix being a function of the particular application in which the abrasive is to be used.

The use of abrasive grit in the manufacture of abrasive tools is not without its problems. During the manufacture of cutting tools, for example during sintering of saw segments containing diamond particles, oxygen may be present, either as dissolved oxygen in the metal powders that form the bond matrix or in gaseous form in the atmosphere. At the sintering temperatures, this oxygen is liable to attack the surface of the diamond particles, which weakens the particles. In some applications, the bond matrix may consist of metals that are typically used as solvent/catalysts for diamond synthesis. Examples of such metals are Fe, Co and Ni. In the molten state, these metals are capable of dissolving diamond, which precipitates on cooling to form graphite. This process of graphitisation of the diamond surface not only weakens the particles but may also result in poorer retention of the particles in the bond.

Coating diamond with metals consisting of the Group IVa, Va and VIa transition metals (Ti, Zr, Hf, V, Nb, Ta, Cr, Mo and W) or alloys thereof, and/or their respective carbides, has been shown to improve the performance of abrasive grit. In particular, coated diamonds are used extensively in metal bond applications such as sawing, grinding and drilling.

For the coating to protect the diamond particles, it has to form a barrier between the bond matrix and the particles. In other words, it should be impermeable and dense, so that components of the bond matrix are unable to pass through and make contact with the particle surface. One way the components could pass through the coating is by solid-state diffusion through the coating. Alternatively, if the coating is incomplete, cracked or porous, components may pass through the coating to reach the particle surface. A coating may initially be dense and impermeable, but during the sintering process, a phase change may occur due to alloying with the bond matrix, for example, which results in the formation of a less dense alloy, or perhaps a porous coating, which allows passage of the bond matrix components through the coating to the particle surface.

Some of the failure modes mentioned above may be time or temperature dependent. For short sintering times, there may not be sufficient time for the problem to develop, but under aggressive sintering conditions, for example long sintering times or high sintering temperatures, these failure modes may become apparent.

The methods for depositing the metal layers on abrasive grit include PVD methods such as described in "Vacuum Deposition of Thin Films" by L. Holland, Chapman and Hall, 1st Edition 1956. Vapour phase CVD methods such as described by M J Hampden-Smith and T T Kodas in "Chemical Vapour Deposition", Vol. 1, No. 1, 1995 can also be used. Alternative thermodiffusion methods involve the mixing of the abrasive grit with oxidised metal powders and heating under inert atmosphere (usually vacuum) such as described by V G Chuprina (Soviet Powder Metallurgy and Metal Ceramics 1992, Vol. 31, No. 7, pp 578-83 and ibid 1992, Vol. 31, No. 8, pp 687-92). In processes involving deposition from a metal halide gas phase, the particles to be coated are exposed to a metal-halide containing the metal to be coated (e.g. Ti) in an appropriate gaseous environment (e.g., non-oxidising environments containing one or more of the following: inert gas, hydrogen, hydrocarbon, reduced pressure). The metal halide may be generated from a metal as part of the process.

The mixture is subjected to a heat cycle during which the metal-halide transports the Ti to the surfaces of the particles where it is released and is chemically bonded to the particles. The use of molten alkaline metal halides such as described by Oki and Tanikawa in Proceedings of 1st International Conference on Molten Salt Chemistry and Technology, p 265, 1983 also offers a means of coating diamonds with the Group IVa, Va and Vla transition metals. This latter method uses a similar chemistry to that of the CVD methods.

United States Patent No. 5,024,680 describes a multiple coated diamond grit for improved retention in a tool matrix. The coated grit comprises a first coating layer of a metal carbide of a strong carbide former, preferably chromium, chemically bonded to the diamond, and a second metal coating of an oxidation resistant carbide former, preferably tungsten, tantalum or molybdenum, chemically bonded to the first metal layer. A third metal layer coating of an alloying metal such as nickel may be added. The coated grit is produced by applying a first layer of metal to the grit by metal vapour deposition (chemical vapour deposition of this layer is said to provide no advantage), followed by applying the second layer metal by chemical vapour deposition.

It is well known that elements like Fe, Co and Ni can graphitise diamond. Where chromium carbide is used as a coating material, it is not particularly effective at preventing such graphitisation, e.g. in the case of iron, which limits its effectiveness.

The second layer is also specifically a thick layer. It is therefore necessary to have the second layer chemically bonded to the first layer, requiring the use of either high temperature coating processes or a separate heating step to create such chemical bonding.

United States Patent 5,232,469 describes multi-layer coated diamond abrasive particles having improved wear performance in abrasive tools. The coating comprises a single homogenous, carbide forming metal primary layer, preferably of chromium, which is chemically bonded to the surfaces of the diamond abrasive particles. A suitable method for depositing the primary layer is said to be a packed salt cementation process. Other methods for depositing the primary layer are said to include chemical vapour deposition (CVD), in particular low pressure chemical vapour deposition (LPCVD). At least one non-carbide forming secondary layer is applied over the primary layer by electroless deposition. It is typically comprised of nickel/phosphorous or cobalt/phosphorous.

The use of an outer layer deposited electrolessly limits the possible outer layers to relatively few transition metals such as Ni and Co, for example. These metals, while they may confer some favourable properties on the composite coating, have the disadvantage that they can permeate the underlying metal carbide layer and catalyse graphitisation of diamond during a subsequent sintering cycle. This results in debonding of the coating from the diamond.

Another limitation is that these metals are metals typically found in matrices used to hold the coated diamond particles. There is thus little added advantage in having them present as an additional coating on the diamond.

### SUMMARY OF THE INVENTION

According to the invention, a method of producing coated ultra-hard abrasive material includes the steps of applying an element capable of forming (singly or in combination) carbides, nitrides or borides to the surface(s) of the abrasive material as an inner layer using a hot coating process and applying at least one outer layer of a coating material selected from the group comprising metal carbides, metal nitrides, metal borides, metal oxides and metal carbonitrides, boronitrides and borocarbonitrides by physical vapour deposition or chemical vapour deposition.

Typically the inner layer elements come from groups IVa, Va, VIa, IIIb and IVb of the periodic table and include, for example, vanadium, molybdenum, tantalum, indium, zirconium, niobium, tungsten, aluminium, boron and silicon.

The application of the inner layer or coating may be by any appropriate hot coating process including processes involving deposition from a metal halide gas phase, a CVD process, or a thermodiffusion process, which results in chemical bonding between the metal in the inner layer and the substrate.

The application of the outer coating is selected so as to tailor the physical and chemical properties of the coating so as to achieve a balance between the often competing requirements of such a coating. The benefits of this include:
- to provide a thicker coating on the ultra-hard abrasive material than achievable with a hot coating technique, thereby rendering it more robust and capable of withstanding higher temperatures and capable of delaying the passage of aggressive elements, for instance in the bond matrix of an abrasive tool component, thereby preventing chemical attack such as oxidation or graphitisation of the substrate or portions thereof;
- providing a coating layer with a composition that prevents passage of aggressive elements thereby protecting the inner layer and substrate against deterioration from chemical attack or other deteriorating processes;
- provide a coating layer with a composition that is resistant to attack by oxidation or matrix elements during subsequent fabrication steps, such as sintering, which would otherwise compromise either or both of the primary roles of the coating (retention and protection of the substrate); and
- improved compatibility of the coating system with the matrix that results in improved bonding between the coat system and the matrix.

The outer coating is applied by reactive sputtering where a reactive gas is admitted to the sputtering chamber, resulting in the deposition of a compound of the reactive gas and the element being sputtered. Examples include titanium carbide or nitride, formed by admitting a hydrocarbon or nitrogen, respectively.

The ultra-hard abrasive material is diamond or cBN and may include diamond or cBN grit, PCD substrates, thermally stable PCD (TSPCD) substrates, PcBN substrates, CVD diamond film, single crystal diamond substrates.

### DESCRIPTION OF PREFERRED EMBODIMENTS

Whilst the method of the invention can be used to coat any ultra-hard abrasive material, it will be described with reference to the coating of diamond grit for convenience.

The diamond grit particles are those used conventionally in the manufacturing of sintered metal bonded tools. They are generally uniformly sized, typically 0.1 micron to 10 millimetres. Examples of such diamond grit particles include: Micron grit 0.1 to 60 micron, wheel grit 40 micron to 200 micron, saw grit 180 micron to 2 millimetres, mono crystal 1 millimetre to 10 millimetres, CVD inserts of a few square millimeter to discs up to 200 millimeter diameter, PCD inserts of a few square millimeter to discs 104 millimeter diameter, cBN grit in micron range 0.1 to 60 micron, in wheel grit range 40 micron to 200 micron, PCBN inserts of a few mm to discs up to 104 mm diameter.

The diamond particles are first coated in a hot coating process to provide an inner layer, which may be a metal layer or a metal carbide, nitride or carbonitride layer. In the case of cBN, such inner coating would typically be a metal nitride, boride or boronitride layer. In this hot coating process, the metal-based coat is applied to the diamond substrate under suitable hot conditions for such bonding to take place. Typical hot coating technologies that can be used include processes involving deposition from a metal halide gas phase, CVD processes or thermodiffusion processes, for example. Processes involving deposition from a metal halide gas phase and CVD processes are preferred.

In processes involving deposition from a metal halide gas phase, the particles to be coated are exposed to a metal-halide containing the metal to be coated (e.g. Ti) in an appropriate gaseous environment (e.g. non-oxidising environments containing one or more of the following: inert gas, hydrogen, hydrocarbon, reduced pressure). The metal halide may be generated from a metal as part of the process.

The mixture is subjected to a heat cycle during which the metal-halide transports the Ti to the surfaces of the particles where it is released and is chemically bonded to the particles.

The outer layer or layers are deposited using reactive sputtering. In this method, a metal such as Ti is deposited as stable titanium carbide, titanium nitride or titanium dioxide by admitting a gas like C, N or O into the reaction chamber. The ratio between the compounds can be adjusted by varying the amount of gas admitted. Thus a variation in Ti:C, for example, can be achieved. It is also possible to sputter from two or more locations simultaneously, giving rise to compounds with different ratios or compositions. The outer layer or layers allows for thicker coatings on the diamond particles than would be the case with a hot coating process used for the inner layer, which is limited by the rate of diffusion of carbon through the coat itself. The outer layer also allows for tailoring of the properties and the behaviour thereof.

In one embodiment, the outer coating layer has the same composition as that of the inner layer, for example titanium carbide. While the composition may be the same, the use of different processes for depositing the two layers allows one to modify the microstructure of the second layer, making it more coherent and consequentially less permeable, for example. The thick titanium carbide coating that results is more robust and is able to survive higher temperatures or more aggressive environments. It also allows for larger reaction times when manufacturing abrasive tools, without diffusion of metals in the bond matrix, for instance, through the coating and attacking the diamond particles. As a consequence, the use of titanium carbide coated diamond particles is possible in applications which in the past were too aggressive.

The PVD application of the outer layer in this embodiment also allows for several layers of differing titanium carbide composition or titanium carbide composition gradients. Such layers are applied by reactive sputtering titanium carbide. In so doing, it is possible to enhance the bonding of the titanium carbide outer layer(s) to the titanium carbide inner layer, by matching the properties and lattice constant thereof to the inner layer, whilst enhancing the bonding of the outer layer(s) to the metal bond matrix. It therefore allows the use of titanium carbide coatings in applications where they traditionally do not bond well to the metal bond matrix. One example would be tungsten carbide, which would be used to prevent graphitisation of the diamond surface.

In a further embodiment, the inner layer is a titanium carbide layer applied by CVD and the outer layer or layers is formed of a metal carbonitride, such as titanium carbonitride, which is particularly suited in aggressive sintering conditions. It is particularly suited to forming a barrier to the diffusion of Co, Fe and Ni from a metal bond matrix thereof, thereby allowing it to be used in low Cu in Fe, Co and Cu or iron or high iron hot pressing processes. The Ti:(C,N) and C:N ratios can be manipulated to optimise the properties of the outer layer. Once again it allows for multiple layers or for the arrangement of gradients of the titanium carbonitride in the PVD layer. This again allows it to be tailored for those applications where titanium carbonitride coatings traditionally do not form good bonds with the metal bond matrix. A similar example, useful for its chemical resistance, is titanium aluminium carbonitride. The ratios between metal and non-metal, the ratios between the metals or between the non-metals can all be varied either continuously (creating gradients) or discontinuously (creating multiple layers) in order to tailor the chemical and or physical properties of the coating.

The invention will now be described in more detail, by way of example only, with reference to the following non-limiting examples.

### EXAMPLE 1 (outside of the invention)

Diamond grit from Element Six, 40/45 US mesh size, was coated in a CVD process to produce TiC coated diamond according to general methods commonly known in the art. The CVD TiC coated diamond was then used as the substrate for the second coating step.

3,000 carats of this TiC coated diamond, 40/45 US mesh size, was placed in a magnetron sputter coater with a rotating barrel and a large pure titanium metal plate as the target. The coating chamber was evacuated, argon was admitted and the power turned on to form plasma. Sputtering power was increased to 5000W while rotating the barrel to ensure an even coating on all the diamond particles. Sputtering of titanium metal was continued for two runs of 160 minutes, a sample taken after the first run for analysis before continuing. The coated diamond was allowed to cool before removing from the chamber.

An analysis of this coated diamond after the second run was undertaken, consisting of X-ray diffraction, X-ray fluorescence, Chemical assay of the coating, Optical and Scanning Electron Microscopy image analysis, and particle fracture followed by cross-sectional analysis on the SEM.

Visually, this coating appeared a grey metallic colour. This colouring appeared evenly distributed over each particle and each particle appeared identical. The coating looked uniform and without any uncoated areas. Observation on the SEM again showed an even coating of agglomerated particles with a slightly rough morphology. This particular coating resulted in an assay of 3.4%. The TiC coating in this size used for this batch typically has an assay of 0.77%. The rest of the 3.4% is therefore attributable to the titanium layer on top on the TiC. Particles were fractured and observed in the SEM, and the two coatings could only be distinguished by microstructure. The PVD coating was measured to be 1 micron on top of the CVD TiC sub coating. When analysed using XRD, diamond, TiC and Ti metal were found. XRF analysis showed 100% Ti.

### EXAMPLE 2 (outside of the invention)

CVD TiC coated diamond was produced as in Example 1. This TiC coated diamond was then used as the substrate for the second coating step. 500 carats of this TiC coated diamond, 40/45 US mesh size, was placed in a magnetron sputter coater with a rotating barrel and a pure titanium metal plate as the target. The coating chamber was evacuated, argon was admitted and the power turned on to form plasma. Sputtering power was increased to 5000W while rotating the barrel to ensure an even coating on all the diamond particles. Sputtering of titanium metal was continued for 120 minutes. The coated diamond was allowed to cool before removing from the chamber.

An analysis of this coated diamond was undertaken, consisting of X-ray diffraction, X-ray fluorescence, Chemical assay of the coating, Optical and Scanning Electron Microscopy image analysis, and particle fracture followed by cross-sectional analysis on the SEM.

Visually, this coating appeared a grey metallic colour. This colouring appeared evenly distributed over each particle and each particle appeared identical. The coating looked uniform and without any uncoated areas. Observation on the SEM again showed an even coating of agglomerated particles with a slightly rough morphology. This particular coating resulted in an assay of 3.77%. The TiC coating in this size used for this batch typically has an assay of 0.77%. The rest of the 3.77% is therefore attributable to the titanium layer on top on the TiC. Particles were fractured and observed in the SEM. The two coatings could once again only be distinguished by microstructure. The PVD coating was measured to be 1 to 2 microns on top of the CVD TiC sub-coating. When analysed using XRD, diamond, TiC and Ti were found. XRF analysis showed 100% Ti.

### EXAMPLE 3

CVD TiC coated diamond was produced as in Example 1. This TiC coated diamond was then used as the substrate for coating. 1,000 carats of this TiC coated diamond, 40/45 US mesh size, was placed in a magnetron sputter coater with a rotating barrel and a large pure silicon metal plate as the target. The coating chamber was evacuated, argon was admitted and the power turned on to form plasma. Sputtering power was increased to 5A (400V) on target while rotating the barrel to ensure an even coating on all the diamond particles at 20sccm argon pressure. Butane gas was admitted to achieve a pressure of 30sccm. Sputtering of silicon reacted with carbon was continued for 5 hours. The coated diamond was allowed to cool before removing from the chamber.

An analysis of this coated diamond was undertaken, consisting of X-ray diffraction, X-ray fluorescence, Chemical assay of the coating, Optical and Scanning Electron Microscopy image analysis, and particle fracture followed by cross-sectional analysis on the SEM.

Visually, this coating appeared to have a rainbow effect between particles, red, green, blue and gold colourings being seen. The coating looked uniform and without any uncoated areas. Observation on the SEM showed an even coating with a smooth morphology. A two-layer structure was clearly evident, the SiC layer having a thickness of about 0.25 microns. This particular coating resulted in an assay of 0.59%. The TiC coating in this size used for this batch typically has an assay of 0.45%. The rest of the 0.59% is therefore attributable to the SiC layer on top of the TiC. When analysed using XRD, diamond, TiC and what is believed to be SiC were found. XRF analysis showed 78% Ti and 22% Si.

### EXAMPLE 4

CVD TiC coated diamond was produced as in Example 1. This TiC coated diamond was then used as the substrate for coating. 1,000 carats of this TiC coated diamond, 40/45 US mesh size, was placed in a magnetron sputter coater with a rotating barrel and a large pure aluminium metal plate as the target. The coating chamber was evacuated, argon was admitted and the power turned on to form plasma. Sputtering power was increased to 8A (290V) on the aluminium target while rotating the barrel to ensure an even coating on all the diamond particles at 20sccm argon pressure. Oxygen gas was admitted to achieve an Optical Emission Measurement of 30%. Sputtering of aluminium reacted with oxygen was continued for 1 hour. The coated diamond was allowed to cool before removing from the chamber.

An analysis of this coated diamond was undertaken, consisting of X-ray diffraction, X-ray fluorescence, Chemical assay of the coating, Optical and Scanning Electron Microscopy image analysis, and particle fracture followed by cross-sectional analysis on the SEM.

Visually, this coating did not appear very different from the CVD TiC coating. On closer examination a thin milky white coating was seen on the particles. Observation on the SEM showed a very thin smooth coating on top of the CVD TiC. A two-layer structure was not evident, the complete layer having a thickness of about 0.6 microns. This particular coating resulted in an assay of 0.69%. The TiC coating in this size used for this batch typically has an assay of 0.45%. The rest of the 0.69% is therefore attributable to the Al₂O₃ layer on top of the TiC. When analysed using XRD, diamond and TiC were found. XRF analysis showed 85% Ti and 15% Al.

### EXAMPLE 5

CVD TiC coated diamond was produced as in Example 1. This TiC coated diamond was then used as the substrate for coating. 1,000 carats of this TiC coated diamond, 40/45 US mesh size, was placed in a magnetron sputter coater with a rotating barrel and a large pure aluminium metal plate as the target. The coating chamber was evacuated, argon was admitted and the power turned on to form plasma. Sputtering power was increased to 6A (290V) on target while rotating the barrel to ensure an even coating on all the diamond particles at 20sccm argon pressure. C₄H₁₀ gas was admitted to achieve an Optical Emission Measurement of 50%. Sputtering of aluminium reacted with carbon was continued for 1 hour. The coated diamond was allowed to cool before removing from the chamber.

An analysis of this coated diamond was undertaken, consisting of X-ray diffraction, X-ray fluorescence, Chemical assay of the coating, Optical and Scanning Electron Microscopy image analysis, and particle fracture followed by cross-sectional analysis on the SEM.

Visually, this coating appeared to have a grey - brown colour with a reflected rainbow effect. The coating looked uniform and smooth and without any uncoated areas. Observation on the SEM showed a very thin even coating with a relatively smooth morphology. A two-layer structure was not evident, the complete layer having a thickness of about 0.25 microns. This particular coating resulted in an assay of 0.71%. The TiC coating in this size used for this batch typically has an assay of 0.45%. The rest of the 0.71% is therefore attributable to the AIC layer on top of the TiC. When analysed using XRD, only diamond and TiC were found. XRF analysis showed 77% Ti and 23% Al.

## Claims

1. A method of producing coated ultra-hard abrasive material selected from diamond and CBN including the steps of applying an element capable of forming (singly or in combination) carbides, nitrides or borides to the surface(s) of the abrasive material as an inner layer using a hot coating process and applying at least one outer layer of a coating material selected from the group comprising metal carbides, metal nitrides, metal borides, metal oxides and metal carbonitrides, metal boronitrides and borocarbonitrides by reactive sputtering using a reactive gas that results in the deposition of a compound of the reactive gas and the element being sputtered.

2. A method according to claim 1, wherein the application of the inner layer or coating is by a hot coating process selected from the group comprising processes involving deposition from a metal halide gas phase, CVD processes, and thermodiffusion processes.

3. A method according to claim 1 or claim 2, wherein the inner layer is formed from an element selected from the group comprising groups IVa, Va, VIa, IIIb and IVb of the periodic table.

4. A method according to claim 2, wherein the inner layer is formed from an element selected from the group comprising vanadium, molybdenum, tantalum, indium, zirconium, niobium, tungsten, aluminium, boron and silicon.

5. A method according to any one of the preceding claims, wherein the outer coating is titanium, silicon or aluminium carbide or nitride, formed by admitting a hydrocarbon or nitrogen, respectively.

6. A method according to claim 1, wherein the ultra-hard material is diamond or cBN grit, a PCD substrate, a thermally stable PCD (TSPCD) substrate, a PcBN substrate, a CVD diamond film, or a single crystal diamond substrate.

7. A method according to any one of the preceding claims, wherein the inner layer and outer coating have the same composition, but a different microstructure.

8. A method according to claim 7, wherein the inner layer and outer coating are both titanium carbide.

9. A method according to any one of claims 1 to 6, wherein the inner layer is titanium carbide and the outer coating is titanium carbonitride or titanium aluminium carbonitride.

## Patentansprüche

1. Verfahren zur Herstellung von beschichtetem, ultrahartem abrasivem Material, ausgewählt aus Diamant und CBN, umfassend die Schritte des Aufbringens eines Elements, welches fähig ist, (einzeln oder in Kombination) Karbide, Nitride oder Boride auf der/den Oberfläche/n des abrasiven Materials als eine innere Schicht unter Verwendung eines Heißbeschichtungsverfahrens zu bilden, und des Aufbringens mindestens einer äußeren Schicht eines Beschichtungsmaterials, ausgewählt aus der Gruppe umfassend Metallkarbide, Metallnitride, Metallboride, Metalloxide und Metallkarbonitride, Metallboronitride und -borokarbonitride durch reaktive Kathodenzerstäubung unter Verwendung eines Reaktionsgases, was zu der Abscheidung eines Gemisches des Reaktionsgases und des zerstäubten Elements führt.

2. Verfahren nach Anspruch 1, wobei die Aufbringung der inneren Schicht oder Beschichtung durch ein Heißbeschichtungsverfahren erfolgt, welches ausgewählt ist aus der Gruppe umfassend Verfahren, die die Abscheidung aus einer Metallhaloidgasphase, chemische Gasphasenabscheidungs (CVD)-Verfahren und Thermodiffusionsverfahren einschließen.

3. Verfahren nach Anspruch 1 oder Anspruch 2, wobei die innere Schicht von einem Element ausgewählt aus der Gruppe umfassend die Gruppen IVa, Va, VIa, IIIb und IVb des Periodensystems gebildet wird.

4. Verfahren nach Anspruch 2, wobei die innere Schicht von einem Element ausgewählt aus der Gruppe umfassend Vanadium, Molybdän, Tantal, Indium, Zirconium, Niobium, Wolfram, Aluminium, Bor und Silicium gebildet wird.

5. Verfahren nach einem der vorhergehenden Ansprüche, wobei die äußere Beschichtung Titan-, Silicium- oder Aluminiumkarbid oder -nitrid ist, gebildet durch Zugeben eines Kohlenwasserstoffs beziehungsweise Stickstoffs.

6. Verfahren nach Anspruch 1, wobei das ultraharte Material Diamant- oder CBN-Sand, ein PKD-Substrat, ein wärmebeständiges PKD (TSPCD)-Substrat, ein PCBN-Substrat, eine CVD-Diamantschicht oder ein Einkristall-Diamantsubstrat ist.

7. Verfahren nach einem der vorhergehenden Ansprüche, wobei die innere Schicht und die äußere Beschichtung die gleiche Zusammensetzung, aber eine verschiedene Mikrostruktur aufweisen.

8. Verfahren nach Anspruch 7, wobei die innere Schicht und die äußere Beschichtung beide Titankarbid aufweisen.

9. Verfahren nach einem der Ansprüche 1 bis 6, wobei die innere Schicht aus Titankarbid und die äußere Beschichtung Titankarbonitrid oder Titanaluminiumkarbonitrid ist.

## Revendications

1. Procédé de production d'un matériau de revêtement abrasif ultra dur sélectionné parmi le diamant et le nitrure de bore cubique (CBN), incluant les étapes consistant à appliquer un élément apte à former (séparément ou en combinaison) des carbures, des nitrures ou des borures sur la(les) surface(s) du matériau abrasif sous forme de couche interne en utilisant un processus d'enduction à chaud, et appliquer au moins une couche externe d'un matériau de revêtement sélectionné parmi le groupe comportant des carbures métalliques, des nitrures métalliques, des borures métalliques, des oxydes métalliques et des carbonitrures métalliques, des boronitrures métalliques et des borocarbonitrures par pulvérisation réactive en utilisant un gaz réactif qui entraîne le dépôt d'un composé du gaz réactif et de l'élément pulvérisé.

2. Procédé selon la revendication 1, dans lequel l'application de la couche interne ou du revêtement s'effectue par un processus d'enduction à chaud sélectionné parmi le groupe comportant des processus impliquant le dépôt à partir d'une phase gazeuse d'halogénures métalliques, des processus de dépôt chimique en phase vapeur (CVD) et des processus de thermodiffusion.

3. Procédé selon la revendication 1 ou la revendication 2, dans lequel la couche interne est formée à partir d'un élément sélectionné parmi le groupe comportant des groupes IVa, Va, VIa, IIIb et IVb du tableau périodique.

4. Procédé selon la revendication 2, dans lequel la couche interne est formée à partir d'un élément sélectionné parmi le groupe comportant le vanadium, le molybdène, le tantale, l'indium, le zirconium, le niobium, le tungstène, l'aluminium, le bore et le silicium.

5. Procédé selon l'une quelconque des revendications précédentes, dans lequel le revêtement externe est du titane, du silicium ou du carbure ou nitrure d'aluminium, formé en admettant un hydrocarbure ou de l'azote, respectivement.

6. Procédé selon la revendication 1, dans lequel le matériau ultra dur est un diamant ou un grain cBN, un substrat de diamant polycristallin (PCD), un substrat PCD thermiquement stable (TSPCD), un substrat de nitrure de bore cubique polycristallin (PcBN), un film de diamant CVD ou un substrat de diamant monocristallin.

7. Procédé selon l'une quelconque des revendications précédentes, dans lequel la couche interne et le revêtement externe ont la même composition, mais une microstructure différente.

8. Procédé selon la revendication 7, dans lequel la couche interne et le revêtement externe sont tous les deux du carbure de titane.

9. Procédé selon l'une quelconque des revendications 1 à 6, dans lequel la couche interne est du carbure de titane et le revêtement externe est du carbonitrure de titane ou du carbonitrure de titane-aluminium.
